# EUROPEAN PATENT APPLICATION

(11) **EP 1 752 925 A1**
(43) Date of publication of application: **14.02.2007**
(21) Application number: 05018953.9
(22) Date of filing: 31.08.2005
(51) Int. Cl.: G06Q 30/00

(54) **Method and system for distribution of digital protected content data via a peer-to-peer data network**

(30) Priority: 20.07.2005 EP 05015815
(71) Applicant: SIEMENS AKTIENGESELLSCHAFT, 80333 München (DE)
(72) Inventor: Rajasekaran, Hariharan, 81375 München (DE)

(57) **Abstract**

A technical problem for distribution of digital protected content data via a peer-to-peer data network is, that the data communication link between the content provider and the data network becomes a bottleneck when all users try to download the protected content data from the content provider thus slowing down the data transfer rate.

It is therefore an object of the present invention to provide a method for distribution of digital protected content data via a stable peer-to-peer data network increasing the data transfer rates for sharing the protected data content between the users.

In order to provide for the foregoing, a method is provided for distribution of digital protected content data via a peer-to-peer data network to which a plurality of users is connected. For each user connected to the peer-to-peer data network a corresponding credit counter is provided for acquiring a protected content data from the content provider. This credit counter can be increased by buying credit points from the content provider for money. The credit counter is also increased depending on the amount of protected content data uploaded by the user to the peer-to-peer data network. Thus, the method according to the present invention provides an incentive to each user to share his downloaded content data with other users by further download.

## Description

### FIELD OF THE INVENTION

The present invention relates to a method and a computer system for distribution of digital protected content data via a data network. More specifically, the invention relates to a method and a computer system for distribution of DRM (Digital Rights Management) protected data via a content provider for a plurality of users via the Internet.

### BACKGROUND OF THE INVENTION

The distribution of content data such as video and audio data via a data network is common. To reduce the unauthorized copying and sharing of content data, the content data is protected as a DRM (Digital Rights Management) data. Digital content data or digital media has gained popularity over analogue media, mostly because of technical advantages associated with the production, reproduction and manipulation and because digital data is of higher perceptual quality than the analogue counterparts. Because of the wide-spread use of personal computers, digital media files have become easy to copy an unlimited number of times without any degradation in the quality of subsequent copies. In contrast, a lot of analogue media data does lose quality with each copy process and even loses quality during normal use. The Internet and file sharing tools make it easy to copy unprotected digital media files.

The unauthorized availability of multiple perfect copies of copyright protected digital media causes a threat to the media industry, particularly to the music and movie industry. Digital media publishers rely on the ability to collect a fee for each copy made over a digital work and sometimes for each performance of that work. DRM was created for digital media publishers as a means to allow them to control the duplication and dissemination of their content data.

DRM is an extension of mandatory access control wherein central policies set up by an administrator are performed by the computer system. An early example of a DRM-system is the content scrambling system (CCS) employed by the DVD forum on movie DVD discs. If the data on the DVD is encrypted it can only be decoded using an encryption key which is kept secret by the DVD consortium. In order to gain the encryption key the DVD player manufacturer is required to sign a license agreement with the DVD consortium which restricts the manufacturer otherwise from including certain desirable features in their DVD players such as digital output which can be used to extract a high-quality digital copy of the movie.

There are other DRM protection systems known in the state of the art. When using a separate hardware a physical protection of the data content can be performed. For example, this includes hardware dongles that are to be attached to a computer for using the software content. Another example is the restriction to buy a DVD in one country and to play it in another country by means of content scrambling because CSS is also used for region encoding. Another possibility is to restrict the functionality of a product until the product is registered with a publisher by means of a special identification code to activate the device. The digital watermarking technique allows an individual to add hidden copyright notices or other verification messages to digital audio, video or image signals on documents. Such a hidden message is a group of bits describing data that pertain to the author of the signal, i. e. name, place, etc. of the author. Digital watermarking does not prevent copying, but it ensures that any copy that is made of the media bears the same hidden information. If the content appears on the peer-to-peer data network, the ID-number can be easily extracted and the purchaser prosecuted.

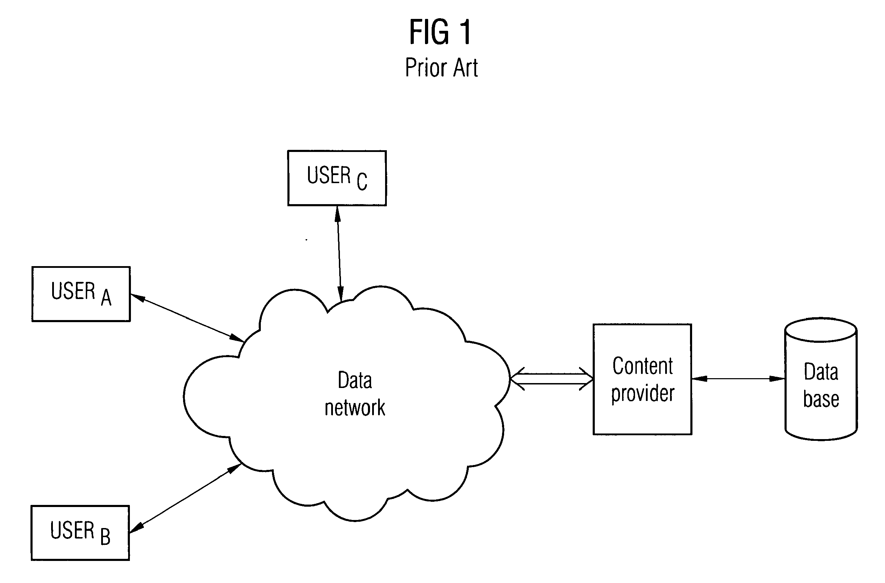

Figure 1 shows a conventional data network according to the state of the art used for distribution of content data. A plurality of users is connected to the data network via data transmission links. Furthermore, a content provider server is connected to the data network via a broadband data transmission link. The content provider server stores in a data base the protected content data, i. e. media data such as video and audio data. A common strategy for a content provider to distribute his protected content is allowing downloading from an online digital store, e. g. i-tunes, or subscription based services, e. g. Napster To Go or Yahoo Music.

A disadvantage of these distribution systems is that the content provider has to provide a very broad bandwidth for downloading content data stored on the server or download by a plurality of users. Obtaining an online portal for a huge number of users is very cost intensive since the costs for hosting a site is proportional to the required bandwidth.

Consequently, content providers have turned their attention to peer-to-peer networks to distribute their protected data content. A peer-to-peer computer network is a network which relies on the computing power and bandwidth of participants in the network other than concentrating it in relatively few servers. Distribution of content files containing audio, video, data or anything in digital format via peer-to-peer networks is common. Some data networks such as Napster use a client server structure for some tasks, e. g. searching, and a peer-to-peer structure for other tasks.

In peer-to-peer networks all clients provide resources, including bandwidth, storage space and computing power. In a client server architecture having a fixed set of servers holding more clients tends to slow down the data transfers for all user. In contrast, the peer-to-peer data network having an additional client or user increases the resources so that the total capacity of the peer-to-peer system is also increased. The distributed nature of a peer-to-peer data network further increases robustness in case of failures.

A major disadvantage of peer-to-peer data networks for distributing content data is the unwillingness of the participating peers to share their content with other users on the network. This is also called the "free rider" problem. The majority of users or clients do download a bigger volume of data than they are willing to make available to other users to download from them. Peer-to-peer network is sustained by a few altruistic peers who share their data content on the peer-to-peer data network with other users. The egoistic behaviour of most peers or users reduces the effectiveness of the peer-to-peer data network because of the limited bandwidth resources of the few altruistic peers who share their content with other users. Furthermore, the variety of files available for download on the network is reduced.

When in the example computer system according to the state of the art as shown in figure 1 user A has a protected digital content data file X and user B has a protected digital content data file Y which they both have downloaded from a content provider there is no incentive for both users, A and B, to share their content with the other user. When user A wants also to have the protected content data file Y and user B wants also to have the protected content data file X there is no incentive for both users to exchange the data files via the data network. The communication data link of both users to the data network is normally a link with a flat rate and comparatively low bandwidth. In contrast, the communication link of the content provider server of the data network does not have a flat rate and offers a very high bandwidth. Accordingly, when user A wishes to download content file Y he has the choice to download it from user B or directly from the content provider server. A data exchange between user A and user B, i. e. downloading file X by user B from user A and downloading file Y by user A from user B does not make sense for both users A, B because they can get the data content from the content provider with a higher download rate and even with more security. The consequence is, that all users try to download the desired data content from the content provider. Consequently, the peer-to-peer system breaks down and becomes a client server system.

A problem for the content provider is, that his communication link to the data network does not have a flat rate but its costs increase proportionally to the downloaded volume of data. Therefore, the distribution costs for the content provider are increased.

A technical problem is, that the data communication link between the content provider and the data network becomes a bottleneck when all users try to download the protected content data from the content provider thus slowing down the data transfer rate.

### SUMMARY OF THE INVENTION

It is therefore an object of the present invention to provide a method and a computer system for distribution of digital protected content data via a stable peer-to-peer data network increasing the data transfer rates for sharing the protected data content between the users.

In order to provide for the foregoing, a method is provided for distribution of digital protected content data via a peer-to-peer data network to which a plurality of users is connected. For each user connected to the peer-to-peer data network a corresponding credit counter is provided for acquiring a protected content data from the content provider. This credit counter can be increased by buying credit points from the content provider for money. The credit counter is also increased depending on the amount of protected content data uploaded by the user to the peer-to-peer data network.

The method according to the present invention provides an incentive to each user to share his downloaded content data with other users by further download.

In one embodiment of the method according to the present invention, the credit counter for the user is decreased by a decrement value depending on the value of protected content data downloaded by the user via said peer-to-peer data network.

In one embodiment of the method according to the present invention, the protected content data is uploaded by said user after the user has received a request for the content data from another user connected to the peer-to-peer data network.

In a preferred embodiment of the method according to the present invention, the request for the content data comprises at least provider identification data for identifying the content provider and
content search data for identifying the requested content data.

In a preferred embodiment of the method according to the present invention, the digital protected content data is encrypted data.

In an embodiment of the method according to the present invention, the protected data is DRM (Digital Rights Management) protected data.

In an embodiment of the method according to the present invention, the credit counter is increased by the user by means of a purchase transaction performed between the user and the content provider.

In an embodiment of the method according to the present invention, the peer-to-peer data network is formed by a Bit Torrent peer-to-peer data network.

In an embodiment of the method according to the present invention, the credit counter is increased by an increment award value which is assigned to a corresponding protected data comprising a predetermined amount of protected data when the protected data file is uploaded by said user to the peer-to-peer data network.

In an embodiment of the method according to the present invention, the increment award value is adapted dynamically depending on the demand for the corresponding protected data.

In an embodiment of the method according to the present invention, the protected content data is stored as a file on the server of the content provider connected to the peer-to-peer data network for download by another user.

In an embodiment of the method according to the present invention, for each protected content data file a corresponding metainfo data file describing the protected content data file is stored on said server of the content provider.

In an embodiment of the method according to the present invention, each protected content data file consists of at least one protected content data sequence.

In an embodiment of the method according to the present invention, the metainfo data file of a protected content data file comprises file identification data for identifying the protected content data file and
a sequence index for each content data sequence of said protected content data file.

In an embodiment of the method according to the present invention, the metainfo data file further comprises for each content data sequence of the protected content data file a unique fingerprint checksum of the content data sequence.

In an embodiment of the method according to the present invention, the request for content data further comprises sequence indices of content data sequences demanded by the requesting user.

In an embodiment of the method according to the present invention, the request for content data further comprises fingerprint checksums of the content data sequences demanded by the requesting user.

In an embodiment of the method according to the present invention, the content provider provides a tracker for tracking users having downloaded content data sequences of a protected content data file for further downloading by another user.

In an embodiment of the method according to the present invention, the tracker stores a table indicating for each sequence index of a content data sequence the network addresses of all users having downloaded the corresponding content data sequence for further download by another user.

In an embodiment of the method according to the present invention, the requesting user looking for a protected content data file sends a request to said content provider wherein said request comprises content search data.

In an embodiment of the method according to the present invention, the content search data sent by said requesting user to the content provider is compared with the file identification data of all metainfo data files stored in a server of said content provider.

In an embodiment of the method according to the present invention, the requesting user receives a list of all content data files whose file identification data which is stored in the corresponding metainfo data file matches the content search data sent by the requesting user.

In an embodiment of the method according to the present invention, the requesting user further receives information data indicating at least one decrement value by which his credit counter is decremented when a download of the corresponding content data file is performed.

In an embodiment of the method according to the present invention, the information data comprises different decrement values,
wherein each decrement value is provided for a corresponding license option which is selectable by said requesting user.

In an embodiment of the method according to the present invention, each user performs a login to a user account provided by said content provider.

In an embodiment of the method according to the present invention, the credit counters of all users are updated centrally by the content provider.

In an alternative embodiment of the method according to the present invention, the credit counter of any user is updated locally in a respective computer of said user.

In an embodiment of the method according to the present invention, for each user a statistic file is provided indicating data uploads performed by the user.

In an embodiment of the method according to the present invention, the statistic file is sent periodically to the content provider via the peer-to-peer data network.

In an embodiment of the method according to the present invention, the peer-to-peer data network is formed by the Internet.

The invention further provides a computer program for distribution of digital protected data via a peer-to-peer data network to which a plurality of users is connected,
wherein for each user connected to the peer-to-peer data network a corresponding credit counter is provided for downloading digital protected content data from a content provider via said peer-to-peer data network,
wherein said credit counter is increased depending on the volume of protected content data uploaded by the user to the peer-to-peer data network.

The invention further provides a data carrier storing a computer program for distribution of digital protected content data via a peer-to-peer data network to which a plurality of users is connected,
wherein for each user connected to the peer-to-peer data network a corresponding credit counter is provided for downloading digital protected content data from a content provider,
wherein said credit counter is increased depending on the volume of protected content data uploaded by said user to said peer-to-peer data network.

The invention further provides a computer system for distribution of digital protected content data comprising a peer-to-peer data network to which a plurality of users are connected,
wherein for each user a credit counter is provided for acquiring protected content data from a content provider,
wherein said credit counter is operative to be increased depending on the volume of protected content data uploaded by said user to said peer-to-peer data network.

In an embodiment of the computer system according to the present invention, each user comprises a computer connected to the peer-to-peer data network via a data communication link.

In an embodiment of the computer system according to the present invention, the content provider comprises at least one server connected to the peer-to-peer data network via a data communication link.

In an embodiment of the computer system according to the present invention, the protected content data is formed by digital protected video data.

In an embodiment of the computer system according to the present invention, the protected content data is formed by digital protected audio data.

The invention further provides a peer-to-peer data network for distribution of digitally protected content data comprising
a plurality of users connected to said peer-to-peer data network,
wherein for each user a credit counter is provided for acquiring protected content data from a content provider,
wherein said credit counter is operative to be increased depending on the amount of protected content data uploaded by the user to said peer-to-peer data network.

The invention further provides a computer for a user for exchanging protected content data via the peer-to-peer data network to which a plurality of users is connected,
wherein for said user a corresponding credit counter is provided for acquiring protected content data from a content provider,
wherein said credit counter is operative to be decreased depending on the value of protected data downloaded by said computer from said peer-to-peer data network,
wherein said credit counter is operative to be increased depending on the volume of protected content data uploaded by said computer to said peer-to-peer data network.

### BRIEF DESCRIPTION OF THE DRAWINGS

- Figure 1: is a schematic illustration of a data network according to the state of the art;
- Figure 2: is a schematic illustration of a peer-to-peer data network according to the present invention;
- Figure 3: is a flowchart illustrating an embodiment of the method according to the present invention;
- Figure 4: is a diagram illustrating a content data file as used by the method and system according to the present invention;
- Figure 5: is a diagram illustrating a metainfo data file as employed by the method and system according to the present invention;
- Figure 6: is a diagram illustrating a request message as used by the method and system according to the present invention;
- Figure 7: is a diagram showing an example for a request message as employed by the method and system according to the present invention;
- Figure 8A, 8B: show examples of a tracker for illustrating the functionality of the method and system according to the present invention;
- Figure 9: is a diagram showing an example of license options for a user as employed by an embodiment of the method and system according to the present invention;
- Figure 10: is an example of tracker statistics as employed by the method and system according to the present invention.

### DETAILED DESCRIPTION OF THE INVENTION

The present invention is described hereinafter with reference to the accompanying drawings, in which preferred embodiments of the present invention are shown. This invention may, however, be embodied in many different forms and should not be perceived to be limited to the embodiment as described herein. As will be appreciated by one skilled in the art, the present invention may be embodied as methods or devices. Accordingly, the present invention may take the form of a hardware embodiment, a software embodiment or an embodiment combining software and hardware components.

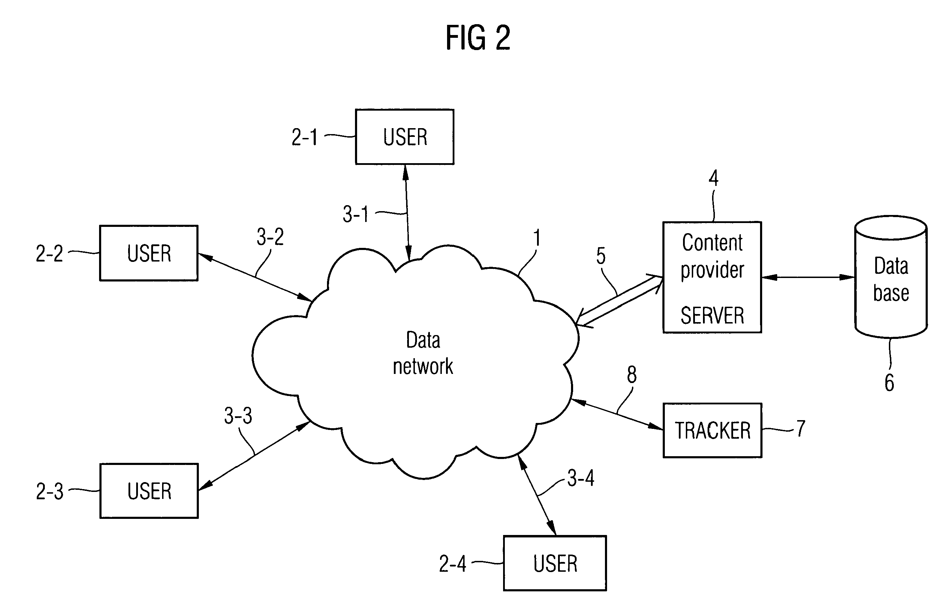

Figure 2 is a schematic illustration of a peer-to-peer data network 1 according to the present invention. The peer-to-peer data network 1 is formed in an embodiment of the present invention by the Internet. To the peer-to-peer data network 1, a plurality of users 2-1, 2-2, 2-3, 2-4 are connected via respective data communication links 3. In the given example of figure 2 only four users are connected to the data network 1, however, it may be appreciated that the number of users connected to the data network 1 is in an alternative embodiment much higher. The data communication links 3 are bidirectional data communication links allowing the download of data from the data network 1 to a user device and an upload of data from the user device to the data network 1.

As can be seen from figure 2 a content provider server 4 is connected to the data network 1 via a data communication link 5. The data communication link 5 is a bidirectional data communication link with a relatively high bandwidth. The content provider server 4 is connected to a data base 6 in which inter alia protected content data is stored. Furthermore, a tracker 7 is connected to the data network 1 via a data communication link 8. The tracker 7 is in one embodiment a separate server. In an alternative embodiment, the tracker 7 might be included in the content provider server 4.

Each user 2 has a user account at the content provider. Each user comprises a peer-to-peer client software. Furthermore, each user 2 gets a incentive management plug-in software (IMP) from the content provider. The plug-in software IMP is a proprietary software of the respective content provider. The IMP plug-in software is responsible for keeping track of the data traffic of the users and offering incentives to the users for uploading data to the data network 1. Each user connected to the peer-to-peer data network 1 has a credit counter for acquiring protected content data from the server 4 of the content provider. Each credit counter is increased depending on the volume or amount of protected content data uploaded by the user 2 to the peer-to-peer data network 1. After creating the user account at the online portal of the content provider, the user gets the IMP plug-in software from the content provider. By means of the IMP plug-in software, the user performs a login to the created account and buys credit points by means of a purchase transaction performed between the user 2 and the content provider. The credit counter of the user 2 is increased accordingly and allows the user 2 a download of protected content data via said peer-to-peer data network 1 from the content provider server 4. The credit counter of the user 2 is decreased by a decrement value depending on the value of protected content data downloaded by the user 2 from the content provider via the peer-to-peer data network 1.

When the user receives a request from another user to share his content, i. e. a request message for the content data from another user connected to the data network 1, the user 2 which receives the request message can decide whether he is willing to share his content. When he is willing to share his content data the data is uploaded by the user 2 to the requesting user via the peer-to-peer data network 1 and the uploading user is rewarded for his willingness to share the content with the other user by increasing his credit counter. The increase of the credit counter is an incentive for the user 2 to share his content with other users because it enables him to download later other protected download content data from the content provider server 4. The credit counter of each user 2 is either maintained locally at the user's site or centrally by the content provider 4.

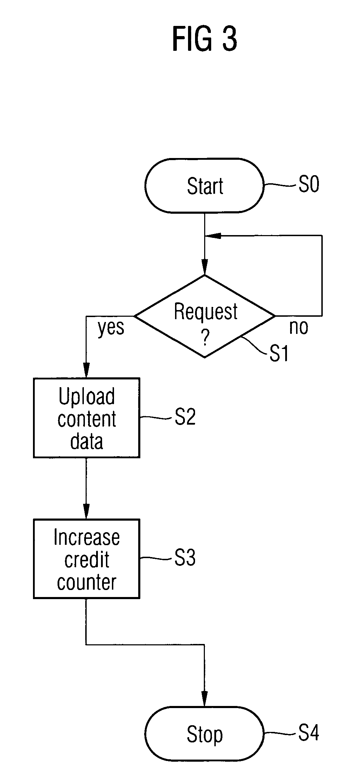

Figure 3 shows a simple flow chart illustrating an embodiment of the method according to the present invention. After a start step S0 the IMP plug-in software waits for a request message of another user connected to the peer-to-peer data network 1 in step S1. After having received a request message and having consented to the data transfer, the requested content data is uploaded by the user 2 to the data network 1 and forwarded to the requesting user in step S2.

The credit counter of the uploading user 2 is increased in step S3 depending on the amount of protected content data uploaded by the user 2 to the peer-to-peer data network 1. The process stops as in step S4.

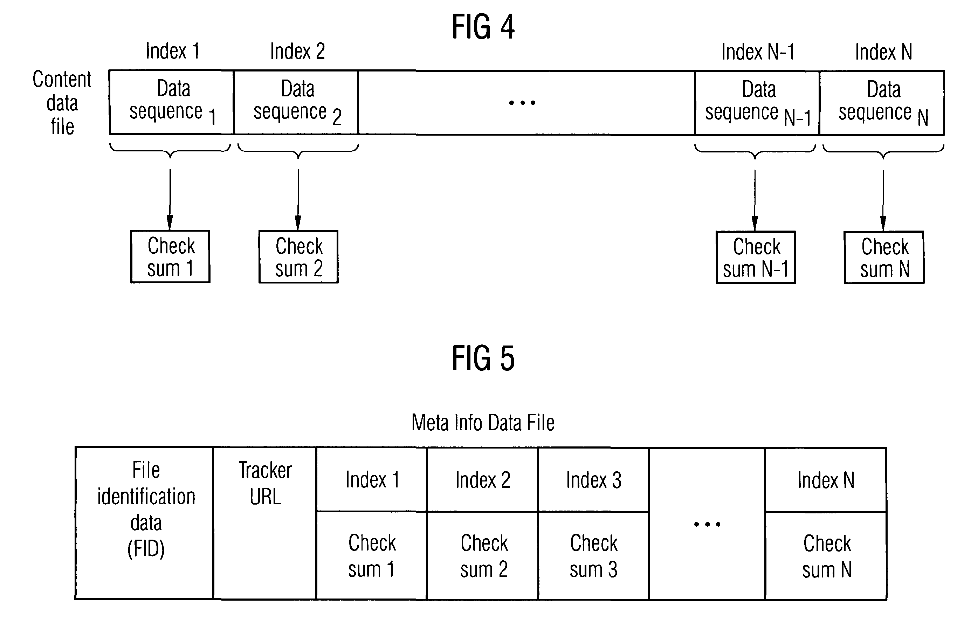

Figure 4 shows the data structure of a content data file as employed by the method or system according to the present invention. The content data file comprises at least one data sequence. Normally, the data file comprises several data sequences. The number N of data sequences in the content data file varies for different content data files. The content data file comprises data sequences of audio or video data bits. The first data sequence might be a first scene in a movie. Each data sequence is referred to by means of an index. Each data sequence has a unique fingerprint checksum as shown in figure 4. The protected content data file as shown in figure 4 is stored on the server 4 of the content provider for the download by another user.

For each protected content data file a corresponding metainfo data file is provided describing the protected content data file stored on the server 4 of the content provider.

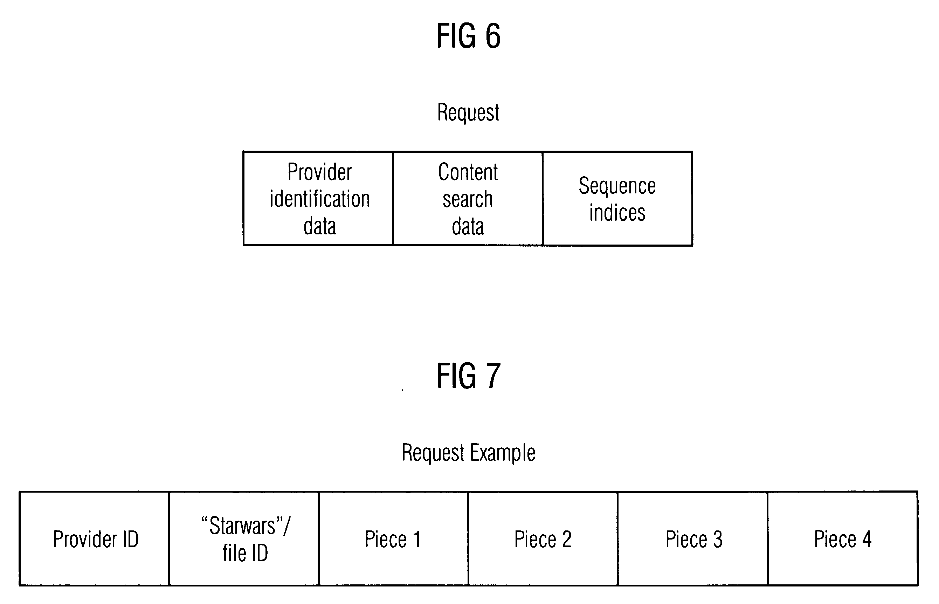

Figure 5 shows the data structure of such a metainfo data file stored on the content provider server 4. The metainfo data file comprises file identification data for identifying the protected content data file. The file identification data is for instance the name of the content data file. Furthermore, the metainfo data file comprises a sequence index for each content data sequence of said protected content data file as shown in figure 5. Optionally, the metainfo data file further comprises for each content data sequence of the protected content data file a unique fingerprint checksum of the respective content data sequence.

Figure 6 shows the data structure of a request message sent by a user looking for a content to other users connected to the peer-to-peer data network 1. The request comprises at least provider identification data for identifying the content provider and the content search data for identifying the requested content data.

Furthermore, the request comprises sequence indices of content data sequences demanded by the requesting user and the fingerprint checksums of the content data sequences demanded by the requesting user.

Figure 7 shows an example for such a request message. The request includes a provider-ID, i. e. the name of the content provider. The content search data is formed by the name of the desired content. In this example, the desired content is a movie called "Starwars". In the given example, the searching user looks for content data sequences 1, 2, 6 of this movie. Optionally, the request message further includes the fingerprint checksums of the desired data sequences 1, 2, 6.

For distribution of a created content file the content provider creates a corresponding metainfo data file as shown in figure 5. For distribution of the content file the content provider stores the metainfo data file on his web server 4. This web server 4 is for example an online movie portal of the content provider. Afterwards, the content provider sets up a tracker, such as the tracker 7 in figure 2. The tracker is provided for tracking users 2 having downloaded content data sequences of a protected content data file for further download by another user 2. The tracker 7 stores a table indicating for each sequence index the network addresses of all users 2 having downloaded the corresponding content data sequence for further download by another user 2.

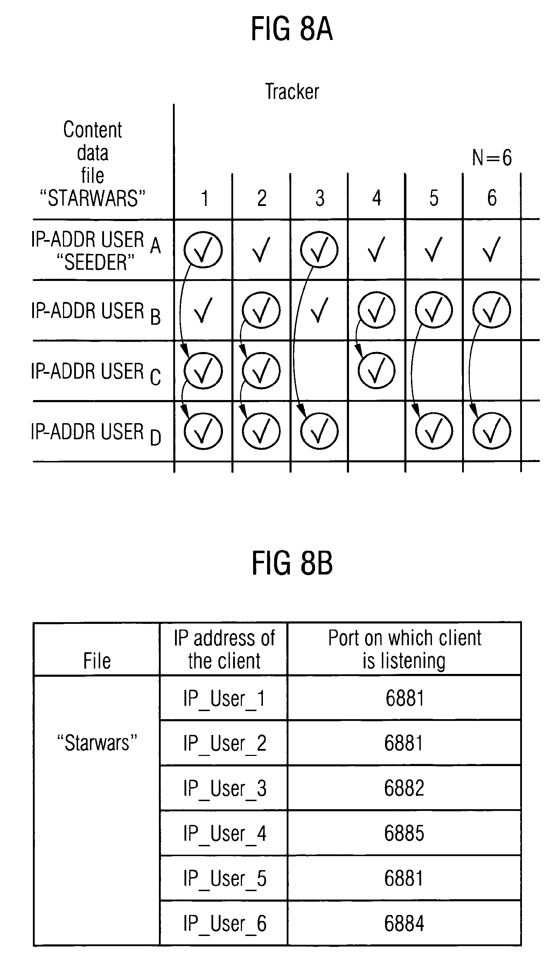

Figure 8A shows such a first embodiment of a table of a tracker 7. The content data file "Starwars" comprises in this example six data sequences. A so called seeder is a user with a copy of the complete content data file. A seeder is for example the content creator who stores the content data files on his web server 4. In the given example of figure 8 the seeder has the IP-address "IP-address User A" holding all data sequences. The first user A is a so called leecher downloading the complete content data file from the web server 4 of the content provider. As can be seen from figure 8, the first downloading user B receives a complete copy of the protected content data file including all six data sequences. The next user C who wishes to download a content data file has a choice to download data sequences either from the content data provider A, i. e. seeder or from another user, e. g. user B, both having a complete copy of the protected content data file. In the given example, this user C downloads the data sequence 1 from the seeder and data sequences 2, 4 from the user B. For this, user C sends a request message to user B indicating that he wishes to download sequences 2, 4 of the content "Starwars". The next user D has the choice either to get the desired data sequences from the seeder A, from user B or from user C. In the given example, user D gets data sequences 1, 2 from user C data sequence 3 from seeder A and data sequences 5, 6 from user B.

Figure 8B shows a second preferred embodiment of a tracker 7. The tracker maintains a table for the particular data file which contains the ip addresses of the peers which are currently sharing the file and the ports in which they are listening on the network. When a user requests the tracker for data, he receives a random list of peers from the tracker. Using this list the user can connect to the peers directly and find out what piece the peer has and download them accordingly. The way this is done is described in the BitTorrent protocol
(http:\\www.bittorrent.com/protocol.html).

The IMP plug-in software of each user 2 offers a search functionality to the user 2 for retrieving metainfo data files matching the user's search criteria from the content provider's online data base. By means of the search functionality of the IMP plug-in software, a request for content data including content search data is sent by the searching user 2 to the data network 1. The content search data sent by the requesting user 2 to the content provider is compared with the file identification data of all metainfo data files stored in a server 4 of the content provider. Accordingly, the file identification data of the metainfo data file as shown in figure 5 is compared with the content search data within the request message as shown in figure 6. In a preferred embodiment, the metainfo data files are formed by Torrent data files. In case that the tracker 7 is provided on a separate server, the metainfo data file as shown in figure 5 further comprises the IP-address (URL) of the tracker web site. A typical size of a Torrent file is a few kilobyte. The tracker 7 is a non-content sharing node in the data network 1 and is used to track the peers in the data network 1. The peers are formed by the end users 2 and can be categorized in three types. A seeder is a user who has a complete copy of the protected content data file. A leecher is a user who is downloading the content from the seeder. The reseeder is a user who shares the downloaded content after completing the download.

When a first user or seeder wishes to distribute his content in the Internet, he puts the content and the corresponding metainfo data file on his movie portal server 4. A user 2 who wishes to download at least a part of the content file has to have a chain-content, a tracker and find a few user that have wished data sequences. The Bit Torrent protocol ensures that all downloading users can get a different part of the content file originally offered by the first seeder. In this manner, the seeder has to send parts of the content file only once and afterwards the downloaders can share their different pieces or data sequences to complete their own content data file. The tracker 7 helps with this exchange process by directing the peers to one another. The consequence of this is, that the data transmission link 5 of the provider does not form a bottle neck for the users 2 for downloading the data sequences of the desired content because it is possible for each user 2 to get data sequences from other users 2 connected to the data network 1. Therefore, the data transfer rates for downloading can be dramatically increased because the users 2 do not have to download data sequences only from the server 4 via the data transmission link 5 having a limited bandwidth. A further effect is that the distribution costs for the content provider are diminished because he has not to offer a data transmission link 5 with a very high bandwidth.

All users 2 participating in this system have an incentive to share their downloaded content with another user 2 because their respective credit counter is increased by uploading data to other users 2 via the peer-to-peer data network 1.

In a preferred embodiment the content data files are formed by encrypted data files for security reasons.

In a preferred embodiment of the method according to the present invention the requesting user receives information data indicating at least one decrement value by which his credit counter is decremented when a download of the corresponding content data file as performed. It is also possible, that the shown information data comprises different decrement values, wherein each decrement value is provided for a corresponding license option which can be selected by the requesting user. A license option is for example the number of times a user can view the content or download the content.

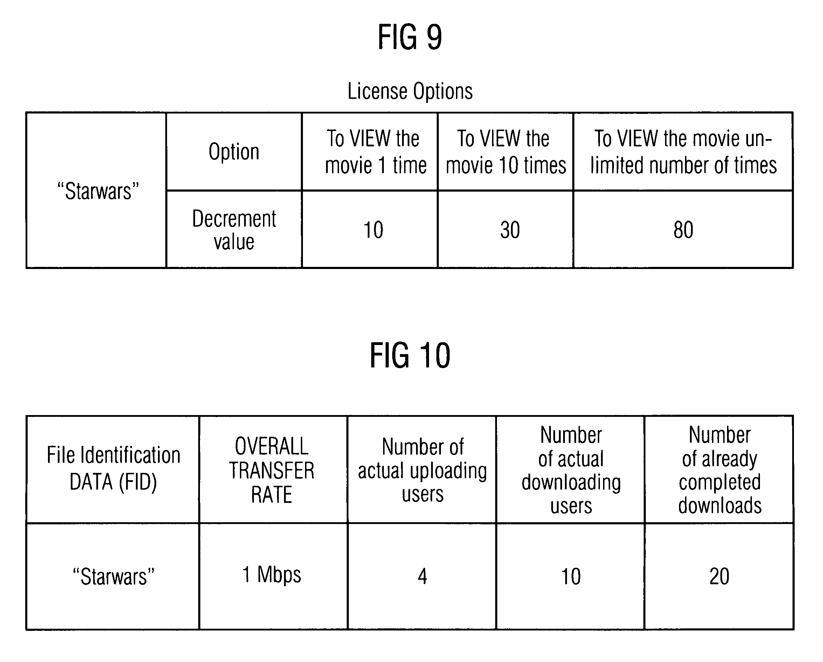

Figure 9 shows an example of such information data for the content file "Starwars". In the given example, the user 2 has different license options, i. e. to view the content file only once or one time to ten times or as many times as he wants. The decrement value by which his credit counter is decremented within the given example is 10 when he view the data file only once. When the user 2 view the data file one to ten times, the credit counter is diminished by a decrement value of 30. By accepting to decrement his credit counter by a value of 80, the user can view the movie as many times as he wants.

The data traffic on the data network 1 can be monitored. Figure 10 shows an example of a monitored data traffic within a peer-to-peer data network 1. In the given example, the overall transfer rate for the content "Starwars" is 1 MBPS. The number of actual uploading users is 4, whereas the actual number of downloading users is ten. The number of already completed downloads is 20. In this example there are 16 potential reseeders who do not share their content at the moment.

In an embodiment of the method according to the present invention, to each protected content data an increment award value is assigned. A credit counter of a user 2 is increased by the increment award value when the protected data file is uploaded by the user 2 to the peer-to-peer data network 1. The increment award value is adapted dynamically depending on the demand for the corresponding protected data. When the demand for the protected content data is high, the increment award value is increased, whereas, when the demand is low, the award value is diminished. This way the content provider can change the incentives offered for sharing particular content data files. This is done by maintaining an award file that lists the current number of points or increment award values awarded for sharing particular content data files. The IMP plug-in software downloads the protected content data file and awards points accordingly. The award file has in one embodiment a predetermined validity period where the IMP plug-in of each users downloads a new award file once a current award file expires. The content provider is able to track the upload data rates from the protected content data files using the tracker 7. When the demand for a particular content data file rises, which is indicated by the rising number of peers 2, the content provider can increase the incentives for sharing this content data file with other users 2. Consequently, the data transfer rate for this particular data file is increased. A change in the award information can be pushed to the IMP plug-in software to the user 2 and the user 2 can then change his uploading pattern, if he wants to receive more award points.

In the computer system according to the present invention, leechers can also upload parts of the same content data file to other users when the content data file is being still downloaded.

In a special situation, i. e. when a new movie is released online via a content provider, a content provider has the full copy of the movie. If all leechers try to limit the upload bandwidth of the file being downloaded to increase the download data rate this results in the reduction of the overall download rate of the file and the content provider server 4 might be overloaded. In this special situation the content provider may award also incentives to leechers as well to increase the overall download rate of the content file being distributed. The user 2 can either receive these incentives as credit points to buy further contents from the content provider or the user 2 can get his account credited with money.

By using his IMP plug-in software a leeching user 2 searches for the desired content data file. When he has found the content, he downloads the metainfo data file and uses a client software to read the metainfo data file. In this way, the tracker-URL is retrieved. The leeching user 2 looks up the tracker data base and retrieves the IP-address of other users 2 having data sequences of the desired content file for further download. Optionally, he further gets the indices of the corresponding content data sequences they hold. Afterwards, the leeching user 2 is connected to the selected users. Finally, the desired content data sequences are downloaded by the leeching user.

A reseeding user 2 receives a request for a protected content data file from another user 2 connected to the peer-to-peer data network 1. The incentive management plug-in software of the reseeder checks whether the request is for content from the IMP plug-in software creator by means of the provider ID. Furthermore, it is checked whether the request comes from another user using the same IMP plug-in software. After agreeing to share the contents the reseeding user 2 transmits the content data sequences to the requesting user 2 via the data network 1. The uploaded data volume is measured by the IMP plug-in software and a statistic file is updated. In a first embodiment, the updated statistic file is sent periodically to the content provider. In an alternative embodiment, a credit counter is increased locally proportional to the uploaded content data based on the values in the current award file.

The computer system according to the present invention uses the already existing peer-to-peer technology, for instance, the Torrent-technology for distribution of DRM protected data via the Internet. By using the peer-to-peer data network 1, the distribution costs of the provider are significantly reduced. By giving incentives for uploading content to users 2, a bottle neck at the communication link 5 of the content provider server 4 is avoided so that the total data transfer rate within the data network 1 for the data transfer of the desired content data file is increased. The computer system according to the present invention gives an incentive to all users 2 to share their content data files with others users 2 so that data transfer rates can be increased.

To increase security of the computer system, the protected content data is usually encrypted and can be accessed only after receiving a license.

In a possible embodiment, the digital content files shared in the system have embedded digital watermarks and are encrypted by the content provider before being distributed to the users 2. If users 2 share a cracked version of the protected file, the leak can be traced by means of the embedded watermark. When such leaks are detected, it is possible to stop file sharing or shutting down the web site of the tracker 7 that coordinates the sharing process. The computer system according of the present invention avoids the possibility of fake copies of protected content data files by making sure that the metainfo data files corresponding to the protected content data files are digitally signed by the content provider. The plug-in software checks this digital signature of the content provider before using any metainfo data file for download.

The computer system according to the present invention offers cost-efficiency to distribute DRM protected data files within a data network without creating bottlenecks at the content provider server 4.

In a further embodiment of the computer system according to the present invention a user 2 is able to use credit points received from one provider to buy content from another content provider using the same single IMP software. The content providers exchange information between their respective servers 4.

## Claims

1. A method for distribution of digital protected content data via a peer-to-peer data network to which a plurality of users is connected,
wherein for each user connected to said peer-to-peer data network a corresponding credit counter is provided for acquiring protected content data from a content provider,
wherein said credit counter is increased depending on the amount of protected content data uploaded by said user to said peer-to-peer data network.

2. The method according to claim 1,
wherein said credit counter of a user is decreased by a decrement value depending on the value of protected content data downloaded by said user via said peer-to-peer data network.

3. The method according to claim 1,
wherein said protected content data is uploaded by said user after the user has received a request for the content data from another user connected to said peer-to-peer data network.

4. The method according to claim 3,
wherein said request for the content data comprises at least
provider identification data for identifying the content provider; and
content search data for identifying the requested content data.

5. The method according to claim 1,
wherein the digital protected content data is encrypted data.

6. The method according to claim 5,
wherein the protected data is DRM (Digital Rights Management) protected data.

7. The method according to claim 1,
wherein the credit counter is increased by the user by means of a purchase transaction performed between the user and the content provider.

8. The method according to claim 1,
wherein the peer-to-peer data network is formed by a Bit Torrent peer-to-peer data network.

9. The method according to claim 1,
wherein said credit counter is increased by an increment award value which is assigned to a corresponding protected data comprising a predetermined amount of protected data when said protected data file is uploaded by said user to said peer-to-peer data network.

10. The method according to claim 9,
wherein said increment award value is adapted dynamically depending on the demand for the corresponding protected data.

11. The method according to claim 1,
wherein the protected content data is stored as a file on a server of said content provider connected to said peer-to-peer data network for download by another user.

12. The method according to claim 11,
wherein for each protected content data file a corresponding metainfo data file describing the protected content data file is stored on said server of said content provider.

13. The method according to claim 12,
wherein each protected content data file consists of at least one protected content data sequence.

14. The method according to claim 13,
wherein the metainfo data file of a protected content data file comprises:
file identification data for identifying the protected content data file; and
a sequence index for each content data sequence of said protected content data file.

15. The method according to claim 14,
wherein the metainfo data file further comprises for each content data sequence of said protected content data file a unique fingerprint checksum of said content data sequence.

16. The method according to claim 3,
wherein said request for content data further comprises sequence indices of content data sequences demanded by the requesting user.

17. The method according to claim 16,
wherein said request for content data further comprises fingerprint checksums of the content data sequences demanded by the requesting user.

18. The method according to claim 13,
wherein the content provider provides a tracker for tracking users having downloaded content data sequences of a protected content data file for further download by another user.

19. The method according to claim 18,
wherein said tracker stores a table indicating for each sequence index of a content data sequence the network addresses of all users having downloaded the corresponding content data sequence for further download by another user.

20. The method according to claim 3,
wherein a requesting user looking for a protected content data file sends a request to said content provider,
wherein said request comprises content search data.

21. The method according to claim 20,
wherein said content search data sent by said requesting user to the content provider is compared with the file identification data of all metainfo data files stored in a server of said content provider.

22. The method according to claim 21,
wherein the requesting user receives a list of all content data files whose file identification data which is stored in the corresponding metainfo data file matches the content search data sent by said requesting user.

23. The method according to claim 22,
wherein the requesting user further receives information data indicating at least one decrement value by which his credit counter is decremented when a download of the corresponding content data file is performed.

24. The method according to claim 23,
wherein the information data comprises different decrement values,
wherein each decrement value is provided for a corresponding license option which is selectable by said requesting user.

25. The method according to claim 1,
wherein each user performs a login to a user account provided by said content provider.

26. The method according to claim 25,
wherein the credit counters of all users are updated centrally by said content provider.

27. The method according to claim 25,
wherein the credit counter of any user is updated locally in a respective computer of said user.

28. The method according to claim 1,
wherein for each user a statistic file is provided indicating data uploads performed by said user.

29. The method according to claim 28,
wherein the statistic file is sent periodically to the content provider via said peer-to-peer data network.

30. The method according to claim 1,
wherein the peer-to-peer data network is formed by the Internet.

31. A computer program for distribution of digital protected data via a peer-to-peer data network to which a plurality of users is connected,
wherein for each user connected to said peer-to-peer data network a corresponding credit counter is provided for downloading digital protected content data from a content provider via said peer-to-peer data network,
wherein said credit counter is increased depending on the volume of protected content data uploaded by said user to said peer-to-peer data network.

32. A data carrier storing a computer program for distribution of digital protected content data via a peer-to-peer data network to which a plurality of users is connected,
wherein for each user connected to said peer-to-peer data network a corresponding credit counter is provided for downloading digital protected content data from a content provider,
wherein said credit counter is increased depending on the volume of protected content data uploaded by said user to said peer-to-peer data network.

33. A computer system for distribution of digital protected content data comprising a peer-to-peer data network to which a plurality of users are connected,
wherein for each user a credit counter is provided for acquiring protected content data from a content provider,
wherein said credit counter is operative to be increased depending on the volume of protected content data uploaded by said user to said peer-to-peer data network.

34. The computer system according to claim 33,
wherein said data network is formed by the Internet.

35. The computer system according to claim 33,
wherein said credit counter is operative to be decreased by a decrement value depending on the value of protected content data downloaded by said user via said peer-to-peer data network.

36. The computer system according to claim 33,
wherein the protected content data is uploaded by said user after the user has received a request message for said content data from another user connected to said peer-to-peer data network.

37. The computer system according to claim 36,
wherein said request message for the content data comprises at least:
provider identification data for identifying said content provider; and
content search data for identifying said requested content data.

38. The computer system according to claim 33,
wherein the protected content data is formed by encrypted data.

39. The computer system according to claim 38,
wherein the protected content data is DRM (Digital Rights Management) protected data.

40. The computer system according to claim 33,
wherein the credit counter is operative to be increased by means of a purchase transaction performed between the user and the content provider.

41. The computer system according to claim 33,
wherein the peer-to-peer data network is formed by a Bit Torrent peer-to-peer data network.

42. The computer system according to claim 33,
wherein said credit counter is operative to be increased by an increment award value which is assigned to a corresponding protected data file comprising a predetermined volume of protected data when said protected data file is uploaded by said user to said peer-to-peer data network.

43. The computer system according to claim 42,
wherein said increment award value is adapted dynamically depending on the demand of the users for the corresponding protected data.

44. The computer system according to claim 33,
wherein the protected content data is stored as a file on a server of said content provider connected to said peer-to-peer data network for download by another user.

45. The computer system according to claim 44,
wherein for each protected content data file a corresponding metainfo data file describing the protected content data file is stored in said server of said content provider.

46. The computer system according to claim 45,
wherein each protected content data file consists of at least one protected content data sequence.

47. The computer system according to claim 46,
wherein the metainfo data file of a protected content data file comprises
file identification data for identifying said protected content data file; and
a sequence index for each content data sequence of said protected content data file.

48. The computer system according to claim 47,
wherein the metainfo data file further comprises for each content data sequence of said protected content data file a unique fingerprint checksum of said content data sequence.

49. The computer system according to claim 37,
wherein said request message for content data further comprises sequence indices of content data sequences demanded by a requesting user.

50. The computer system according to claim 49,
wherein said request for content data further comprises fingerprint checksums of said content data sequences demanded by said requesting user.

51. The computer system according to claim 33,
wherein the content provider comprises a tracker for tracking user having downloaded content data sequences of a protected content data file for further download by another user.

52. The computer system according to claim 51,
wherein said tracker stores a table indicating for each sequence index of a content data sequence the network addresses of all users having downloaded the corresponding content data sequence for further download by another user.

53. The computer system according to claim 33,
wherein a requesting user looking for a protected content data sends a request message to said content provider,
said request comprising content search data.

54. The computer system according to claim 53,
wherein said content search data sent by said requesting user to said content provider is compared to said file identification data of all metainfo data files stored in said server of said content provider.

55. The computer system according to claim 54,
wherein the requesting user receives a list of all content data files whose file identification data being stored in the corresponding metainfo data file match the content search data sent by said requesting user in a request message.

56. The computer system according to claim 55,
wherein said requesting user further receives information data indicating at least one decrement value by which his credit counter is decremented when a download of the corresponding data file by the requesting user is performed.

57. The computer system according to claim 56,
wherein the information data comprises different decrement values,
wherein each decrement value is provided for a corresponding license option which is selectable by said requesting user.

58. The computer system according to claim 33,
wherein each user has a user account provided by said content provider.

59. The computer system according to claim 58,
wherein the credit counters of all user are updated centrally by said content provider.

60. The computer system according to claim 58,
wherein the credit counters of all users are updated locally on a computer of a corresponding user.

61. The computer system according to claim 33,
wherein for each user a statistic file is provided indicating data uploads performed by said user.

62. The computer system according to claim 61,
wherein the statistic file of a user is sent periodically to said content provider via said peer-to-peer data network.

63. The computer system according to claim 33,
wherein each user comprises a computer connected to said peer-to-peer data network via a data communication link.

64. The computer system according to claim 33,
wherein the content provider comprises at least one server connected to the peer-to-peer data network via a data communication link.

65. The computer system according to claim 33,
wherein said protected content data is formed by digital protected video data.

66. The computer system according to claim 33,
wherein said protected content data is formed by digital protected audio data.

67. A peer-to-peer data network for distribution of digitally protected content data comprising:
a plurality of users connected to said peer-to-peer data network,
wherein for each user a credit counter is provided for acquiring protected content data from a content provider,
wherein said credit counter is operative to be increased depending on the amount of protected content data uploaded by the user to said peer-to-peer data network.

68. The peer-to-peer data network according to claim 67,
wherein said data network is formed by the Internet.

69. A computer of a user for exchanging protected content data via a peer-to-peer data network to which a plurality of users is connected,
wherein for said user a corresponding credit counter is provided for acquiring protected content data from a content provider,
wherein said credit counter is operative to be decreased depending on the value of protected data downloaded by said computer from said peer-to-peer data network,
wherein said credit counter is operative to be increased depending on the volume of protected content data uploaded by said computer to said peer-to-peer data network.
